# EUROPEAN PATENT APPLICATION

(11) **EP 4 793 091 A1**
(43) Date of publication of application: **19.08.2026**
(21) Application number: 26158036.9
(22) Date of filing: 12.02.2026
(51) Int. Cl.: B60N 2/28, B60N 3/10

(54) **CHILD CAR SEAT**

(30) Priority: 12.02.2025 US 202563757626 P; 24.04.2025 US 202563794109 P
(71) Applicant: Wonderland Switzerland AG, 6312 Steinhausen (CH)
(72) Inventor: HANS VAN GELDEREN, Martijn, 6312 Steinhausen (CH); STOKHOF DE JONG, Thomas, 6312 Steinhausen (CH); SCHUITEMAKER, Remy, 6312 Steinhausen (CH)
(74) Representative: Pfenning, Meinig & Partner mbB

(57) **Abstract**

A child car seat (100) includes: a seat shell (10) including a seat base (1) and a backrest (2); and a hinge (300, 300A, 300B, 300C) located between the seat base (1) and the backrest (2). The backrest (2) is foldable relative to the seat base (1).

## Description

### TECHNICAL FIELD

The present disclosure relates generally to child car seats and, more specifically, to a booster seat with a foldable backrest.

### BACKGROUND

Child car seats are essential for ensuring the safety and comfort of young passengers in vehicles. Although various configurations of booster seats exist to help raise children to the correct height for using the vehicle's seatbelt, current designs often lack optimal integration of comfort, convenience, and compactness, particularly in terms of foldability, belt retention, and additional features like armrests and cupholders. The present disclosure addresses these challenges by providing a child car seat with a booster seat that integrates a foldable backrest, belt guides, an extendable and pivotable armrest, and deployable cupholders.

### SUMMARY

According to an aspect of the present disclosure, a child car seat is provided, including: a seat shell including a seat base and a backrest; and a hinge located between the seat base and the backrest. The backrest is foldable relative to the seat base.

In an embodiment, the hinge may include a belt guide for passing a seatbelt through the hinge.

In an embodiment, the belt guide may have a curved surface for guiding the seatbelt.

In an embodiment, the hinge may include a hook portion configured to retain the seatbelt in place.

In an embodiment, the hinge may be positioned on an outer perimeter of the seat base.

In an embodiment, the backrest may further include a lower portion and an upper portion. A depth of the lower portion may be less than a depth of the upper portion, and the backrest is configured to prevent collision with the seat base and to facilitate pivoting when folding the backrest relative to the seat base.

In an embodiment, the backrest may further include a lower portion and an upper portion. The lower portion may be located between opposite side portions of the seat base.

In an embodiment, a width of the upper portion may be greater than a width of the lower portion, such that when the child car seat is folded, a portion of a side portion of the backrest is located between the side portions of the seat base and another portion of the side portion of the backrest is located on an outer side of the seat base.

In an embodiment, the side portion of the backrest may be provided with a groove, which is configured to avoid the hinge, so as to prevent the side portion of the backrest from being seized by the hinge.

In an embodiment, the child car seat may further include an armrest, the armrest comprising soft goods on an inner trim.

In an embodiment, the armrest may be pivotable and extends automatically when the backrest is folded down.

In an embodiment, the armrest can be adjusted in height through one or more stages, depending on the child's growth.

In an embodiment, the child car seat may further include a deployable cupholder from the seat base, the cupholder having an overhang portion for easy pulling.

In an embodiment, the cupholder may further have a soft peripheral edge.

In an embodiment, the child car seat may further include one or more cupholders disposed on opposite side portions of the seat base, each of the cupholders being configured to be pulled out from and pushed in toward the seat base.

In an embodiment, the backrest may include a cover located at lower portion of the backrest and extended from the seat base, the cover being configured to hide ribs and technical details.

In an embodiment, the backrest may be covered with softgoods.

According to another aspect of the present disclosure, a child car seat is provided, including: a seat shell including a seat base and a backrest; a hinge positioned between the seat base and the backrest, in which the backrest is foldable relative to the seat base; and armrests attached to the backrest, the armrests being positioned on the opposite side portions of the backrest. Each of the armrest is configured to be adjustable along the backrest between a stored position and a deployed position.

According to another aspect of the present disclosure, a child car seat is provided, including: a seat shell including a seat base and a backrest, the backrest is foldable relative to the seat base; a hinge positioned between the seat base and the backrest; and an armrest attached to the backrest, the armrest including an extendable portion. The extendable portion is movable between a retracted position and an extended position.

In an embodiment, the extendable portion of the armrest may be in the extended position, and be configured to rotate relative to an armrest body of the armrest between a turned-up position and a turned-down position.

### BRIEF DESCRIPTION OF THE DRAWINGS

The objects, features and advantages of the present disclosure will be more readily appreciated upon reference to the following disclosure when considered in conjunction with the accompanying drawings, wherein like reference numerals are used to identify identical components in the various views, and wherein reference numerals with alphabetic characters and/or numeric subscripts are utilized to identify parts or subparts of a component or additional types, instantiations or variations of a selected component embodiment in the various views, as further indicated by textual context, in which:
FIG. 1 is a diagram illustrating a side (elevational) view of an exemplary or representative first embodiment of a child car seat.
FIG. 2 is a diagram illustrating an isometric view of an exemplary or representative first embodiment of a child car seat with a partially enlarged portion of a representative first embodiment of a hinge.
FIG. 2A is a schematic diagram illustrating a partial of a hinge according to another example of the present disclosure.
FIG. 2B is a schematic diagram illustrating a partial of a hinge according to another example of the present disclosure.
FIG. 3A is a diagram illustrating a partial side view of an exemplary or representative first embodiment of a child car seat with a belt passing through a hinge area.
FIG. 3B is a diagram illustrating a partial isometric view of an exemplary or representative first embodiment of a child car seat.
FIG. 3C is a diagram illustrating a partial isometric view of an exemplary or representative first embodiment of a child car seat.
FIGS. 4A-4C (collectively referred to herein as "FIG. 4") are diagrams illustrating partial isometric views of an exemplary or first embodiment of a child car seat and a representative first embodiment of a hinge.
FIG. 5A is a diagram illustrating an isometric view of an exemplary or representative first embodiment of a child car seat and a representative first embodiment of a backrest cover in its folded position.
FIG. 5B is a diagram illustrating a rear (elevational) view of an exemplary or representative first embodiment of a child car seat and a representative first embodiment of a backrest cover.
FIG. 6A is a diagram illustrating a partial isometric view of an exemplary or representative first embodiment of a child car seat and a cupholder.
FIG. 6B is a diagram illustrating a partial isometric view of an exemplary or representative first embodiment of a child car seat and a cupholder in FIG. 6A.
FIG. 7 is a diagram illustrating an isometric view of an exemplary or representative first embodiment of the child car seat and a representative second embodiment of a hinge.
FIG. 8 is a diagram illustrating a side (elevational) view of an exemplary or representative first embodiment of a child car seat and a representative second embodiment of a hinge.
FIG. 9A is a diagram illustrating a side (elevational) view of an exemplary or representative first embodiment of a child car seat and a representative second embodiment of a hinge in its folded position.
FIG. 9B is a diagram illustrating a side (elevational) view of an exemplary or representative first embodiment of a child car seat and a representative second embodiment of a hinge in its deployed position.
FIG. 9C is a diagram illustrating a partial rear view of an exemplary or representative first embodiment of a child car seat and a representative second embodiment of a hinge in its deployed position.
FIG. 10 is a diagram illustrating a partial isometric view of an exemplary or representative second embodiment of a child car seat having a first embodiment of an armrest, the armrest further shown with a representative third embodiment of a hinge, illustrated in an expanded state.
FIG. 11 is a diagram illustrating an isometric view of an exemplary or representative second embodiment of a child car seat having a representative first embodiment of an armrest, the armrest further shown with a representative fourth embodiment of a hinge illustrated in an enlarged state.
FIG. 11A is a partially schematic diagram of an armrest area of the child car seat according to another example of the present disclosure, illustrating the padded effect of an armrest pad.
FIG. 12A is a diagram illustrating a partial isometric view of an exemplary or representative first embodiment of a child car seat having a representative first embodiment of a cupholder, illustrated in a retracted state.
FIG. 12B is a diagram illustrating an isometric view of an exemplary or representative first embodiment of a child car seat having a representative first embodiment of a cupholder, illustrated in a retracted state.
FIG. 13 is a diagram illustrating a partial side (elevational) view of an exemplary or first embodiment of a child car seat having a representative first embodiment of a cupholder with a cup, illustrated in a deployed state.
FIG. 14 is a diagram illustrating a partial isometric view of an exemplary or representative first embodiment of a child car seat having a representative first embodiment of a cupholder with a cup, illustrated in a deployed state.
FIG. 15 is a diagram illustrating a partial isometric view of an exemplary or representative first embodiment of a child car seat having a representative first embodiment of a cupholder with a cup, illustrated in a deployed state.
FIG. 16 is a diagram illustrating a partial isometric view of an exemplary or representative first embodiment of a child car seat with a partially enlarged portion of a representative first embodiment of a cupholder with a cup.
FIG. 17A is a diagram illustrating a partial front view of an exemplary or representative first embodiment of a child car seat having a representative first embodiment of a cupholder, illustrated in a deployed state.
FIG. 17B is a diagram illustrating an enlarged isometric view of an exemplary or representative first embodiment of a cupholder illustrated in FIG. 17A, with a cupholder illustrated in a retracted state.
FIG. 18 is a diagram illustrating an isometric view of an exemplary or representative first embodiment of a cupholder.
FIG. 19 is a diagram illustrating a cross-sectional view (through the A - A' plane of FIG. 18) of an exemplary or representative first embodiment of a cupholder.
FIG. 20 is a diagram illustrating a cross-sectional view (through the B - B' plane of FIG. 18) of an exemplary or representative first embodiment of a cupholder.
FIG. 21 is a diagram illustrating a partial isometric view of an exemplary or representative first embodiment of a child car seat and a representative second embodiment of a backrest cover.
FIG. 22 is a diagram illustrating a partial isometric view of an exemplary or representative first embodiment of a child car seat and a representative third embodiment of a backrest cover.
FIG. 23 is a diagram illustrating an isometric view of an exemplary or representative first embodiment of a child car seat and a representative fourth embodiment of a backrest cover.
FIG. 24 is a diagram illustrating a side (elevational) view of an exemplary or representative third embodiment of a child car seat having a representative second embodiment of an armrest, illustrated in a retracted state.
FIG. 25 is a diagram illustrating a side (elevational) view of an exemplary or representative third embodiment of a child car seat having a representative second embodiment of the armrest, illustrated in a partially deployed state.
FIG. 26 is a diagram illustrating a side (elevational) view of an exemplary or representative third embodiment of a child car seat having a representative second embodiment of the armrest, illustrated in a fully deployed state.
FIG. 27 is a diagram illustrating a side (elevational) view of an exemplary or representative third embodiment of a child car seat having a representative second embodiment of the armrest, with the child car seat illustrated in a folded state.
FIG. 28 is a diagram illustrating a side (elevational) view of an exemplary or representative fourth embodiment of a foldable child car seat having a representative third embodiment of an armrest, illustrated in a stored (or upright) position.
FIG. 29 is a diagram illustrating a side (elevational) view of an exemplary or representative fourth embodiment of a foldable child car seat having a presentative third embodiment of an armrest, illustrated in a deployed (or horizontal) position.
FIG. 30 is a diagram illustrating a side (elevational) view of an exemplary or representative fourth embodiment of a foldable child car seat having a representative third embodiment of an armrest, illustrated in a deployed (or horizontal) position, with the child car seat illustrated in a folded state.
FIG. 31 is a diagram illustrating a side (elevational) view of an exemplary or representative fourth embodiment of a foldable child car seat having a presentative third embodiment of an armrest, illustrated in a stored (or upright) position, with the child car seat illustrated in a folded state.
FIG. 32 is a diagram illustrating a side (elevational) view of an exemplary or representative fifth embodiment of a child car seat having a representative fourth embodiment of an armrest, illustrated in multiple positions from a deployed (or horizontal) position to a stored (or upright) position.
FIG. 33A is a diagram illustrating a side (elevational) view of an exemplary or representative fifth embodiment of the child car seat illustrated in FIG. 32 depicted in a rearward-facing mode, with a representative fourth embodiment of an armrest illustrated in a stored (or upright) position.
FIG. 33B is a diagram illustrating a side (elevational) view of an exemplary or representative fifth embodiment of a child car seat illustrated in FIG. 32 depicted in a forward-facing mode, with a representative fourth embodiment of an armrest illustrated in a stored (or upright) position, and further including an adjustable headrest.
FIG. 33C is a diagram illustrating a side (elevational) view of an exemplary or representative fifth embodiment of a child car seat illustrated in FIG. 32 depicted in a forward-facing mode, with a representative fourth embodiment of an armrest illustrated in a position between a stored (or upright) and deployed (or horizontal) positions, and further including an elevated backrest and headrest.
FIG. 33D is a diagram illustrating a side (elevational) view of an exemplary or representative fifth embodiment of a child car seat illustrated in FIG. 32 depicted in no-back booster mode with a backrest removed.
FIG. 34A is a diagram illustrating a side (elevational) view of an exemplary or representative sixth embodiment of a foldable child car seat having a representative fifth embodiment of an extendable and rotatable armrest, illustrated in a retracted position.
FIG. 34B is a diagram illustrating a side (elevational) view of an exemplary or representative sixth embodiment of a foldable child car seat having a representative fifth embodiment of an extendable and rotatable armrest, illustrated in an extended and turned-down position.
FIG. 35A is a diagram illustrating a front (elevational) view of an exemplary or representative sixth embodiment of a foldable child car seat illustrated in FIG. 34B, with a representative fifth embodiment of an extendable and rotatable armrest, illustrated in an extended and turned-down position.
FIG. 35B is a diagram illustrating a front (elevational) view of an exemplary or representative sixth embodiment of a foldable child car seat illustrated in FIG. 34B, with a representative fifth embodiment of an extendable and rotatable armrest, illustrated in an extended and turned-up position.

### DETAILED DESCRIPTION

While the present disclosure is susceptible of embodiment in many different forms, there are shown in the drawings and will be described herein in detail specific exemplary embodiments thereof, with the understanding that the present disclosure is to be considered as an exemplification of the principles of the disclosure and is not intended to limit the disclosure to the specific embodiments illustrated. In this respect, before explaining at least one embodiment consistent with the present disclosure in detail, it is to be understood that the disclosure is not limited in its application to the details of construction and to the arrangements of components set forth above and below, illustrated in the drawings, or as described in the examples. Methods and apparatuses consistent with the present disclosure are capable of other embodiments and of being practiced and carried out in various ways. Also, it is to be understood that the phraseology and terminology employed herein, as well as the abstract included below, are for the purposes of description and should not be regarded as limiting.

The present disclosure provides a child car seat 100 having or configured as a booster seat that allows for a more compact and functional design, including a foldable backrest, a belt guide on a hinge, and a deployable cupholder. The seat may or may not include armrests, and the configuration of these features enhances both the aesthetics and usability of the seat.

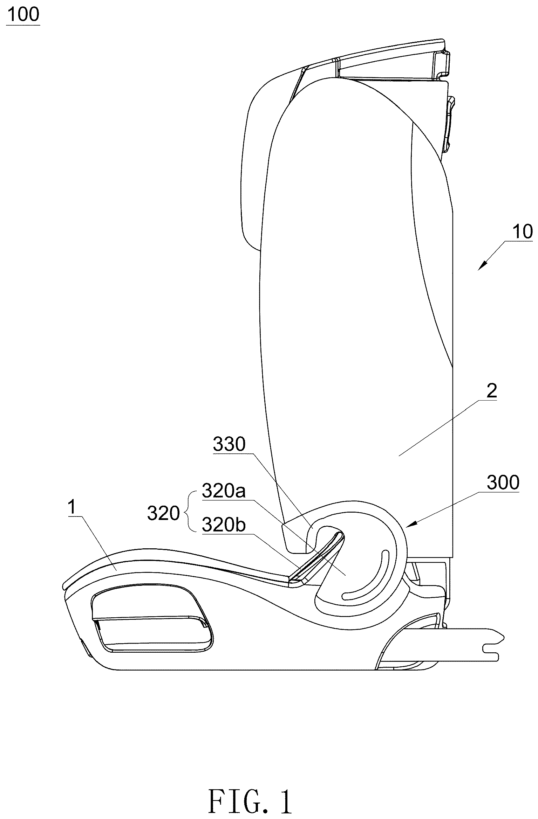

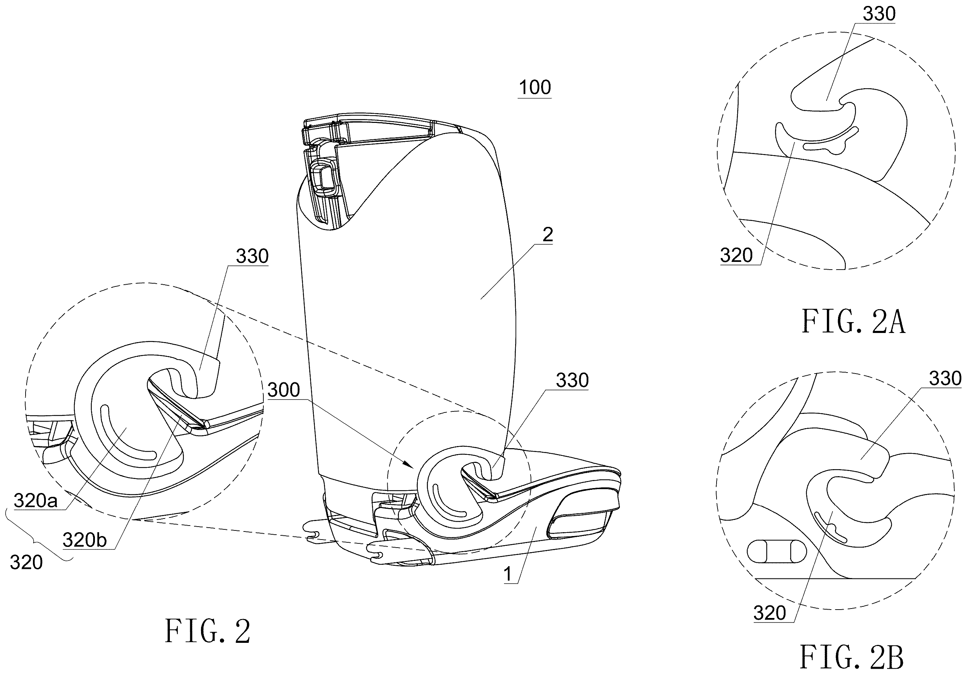

FIG. 1 is a diagram illustrating a side view of an exemplary or representative first embodiment of a child car seat 100, and FIG. 2 is a diagram illustrating an isometric view of an exemplary or representative first embodiment of a child car seat 100 with a partially enlarged portion of a representative first embodiment of a hinge 300.

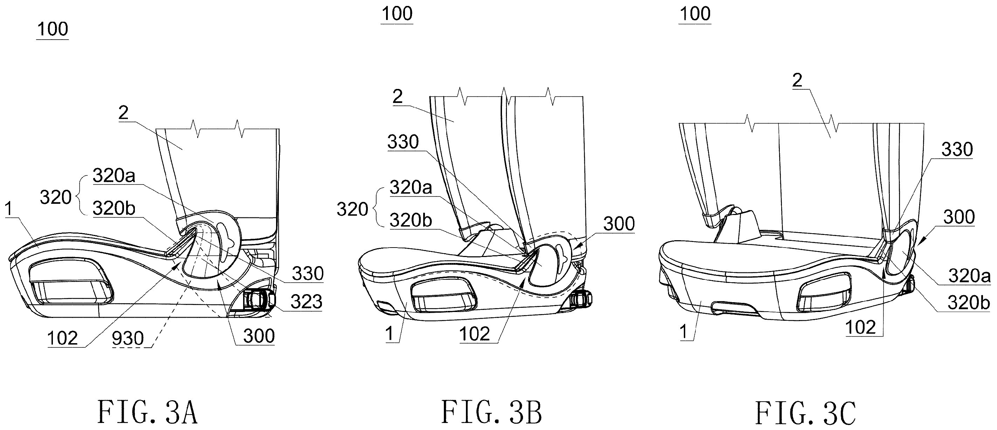

Referring to FIGS. 1-2, the exemplary or representative child car seat 100 includes a seat shell 10 which has a seat base 1 and a backrest 2, and a hinge mechanism or hinge 300 located between the seat base 1 and the backrest 2. The seat shell 10 is configured to accommodate a child occupant, in which the seat shell 10 includes a seat base 1 and a backrest 2 that is foldably connected to the seat basel to allow relative movement therebetween. A hinge mechanism is operatively coupled between the backrest 2 and the seat base 1 to facilitate such folding motion. The hinge mechanism may include or be configured as hinge 300. The hinge 300 may include a belt guide 320. The belt guide 320 may have a limiting portion configured to at least partially limit the seatbelt 930 (see FIG. 3) within the belt guide 320. The limiting portion may be configured, for example, as a hook portion 330 formed by the belt guide 320, but is not limited thereto. As shown in FIGS. 1 and 2, the belt guide 320 may include a first belt guide 320a disposed on the backrest and a second belt guide 320b disposed on the seat base. The first belt guide 320a forms the hook portion 330. The first belt guide 320a and the second belt guide 320b may be hinged to each other, and at least one of the first belt guide 320a or the second belt guide 320b forms the hook portion 330. In other words, the belt guide 320 may be formed by both of a side portion of the seat base 1 and a side portion of the backrest 2. In the illustrated embodiment, the first belt guide 320a forms the hook portion 330. As shown in FIGS. 2A and 2B, in other examples, the belt guide 320 may be disposed on the seat base 1; alternatively, in yet other examples, the belt guide 320 may be disposed on the backrest 2.

FIG. 3A is a diagram illustrating a partial side view of an exemplary or representative first embodiment of a child car seat 100 with a seatbelt 930 (i.e., vehicle seatbelt) passing through a hinge area. FIG. 3B is a diagram illustrating a partial isometric view of an exemplary or representative first embodiment of a child car seat 100. FIG. 3C is a diagram illustrating a partial isometric view of an exemplary or representative first embodiment of a child car seat 100.

Referring to FIGS. 3A-3C, the exemplary or representative hinge mechanism (i.e., hinge 300) includes a belt guide 320 configured to enable a seatbelt 930 to pass therethrough. A side portion of the backrest 2 is hinged to a side portion of the seat base 1. In a representative embodiment as illustrated, the first belt guide 320a may be disposed on the side portion of the backrest 2 or formed by the side portion of the backrest 2. The second belt guide 320b may be formed by the side portion of the seat base 1. The second belt guide 320b protrudes from an upper surface of the seat base 1. The belt guide includes a curved guiding surface adapted to direct the seatbelt along a predetermined path during installation and use. The second belt guide 320b is provided with a receiving groove 102 with the scoop in surface. The first belt guide 320a is at least partially accommodated in the receiving groove 102 and is hinged to the second belt guide 320b. The first belt guide 320a is, for example, a c-shaped belt guide. The first belt guide 320a has an inward moving surface. At least a portion of the curved guide surface 323 is formed by this inward moving surface. In the illustrated embodiment, the inward moving surface of the first belt guide 320a and the scoop in surface of the second belt guide 320b jointly form the curved guide surface 323. This enables the seatbelt 930 to be smoothly guided over the surface. Furthermore, the curved guide surface 323 allows the belt guide 320 to appear more thinner, making it look less bulky.

Continuing to refer to FIGS. 3A-3C, the hinge further includes a hook portion 330 (The hook portion 330 may serve as one implementation of the limiting portion) configured to retain the seatbelt in a secured position within the belt guide. The hinge mechanism (i.e., hinge 300) is disposed on an outer perimeter region of the seat base 1 to facilitate access and integration with the seatbelt system. In this embodiment, the hook portion 330 may be formed by the first belt guide 320a. In other words, the first belt guide 320a includes the hook portion 330. In an up-down direction, the hook portion 330 is at least partially located above the curved guide surface 323 of the belt guide 320. When the seatbelt 930 passes through the belt guide 320, the hook portion 330 can at least partially restrict the seatbelt 930. In the illustrated embodiment, both the hook portion 330 and the first belt guide 320a are located on an outer side of the second belt guide 320b. That is, at least a portion of the side of the seat base 1 is located on an outer side of the seat base 1.

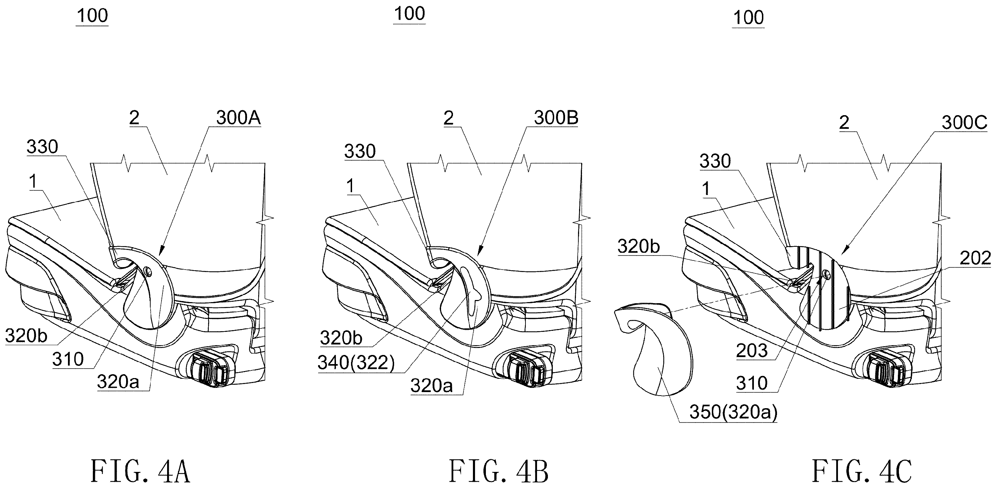

FIGS. 4A, 4B and 4C are diagrams illustrating partial isometric views of an exemplary or first embodiment of a child car seat 100 and a representative first embodiment of a hinge 300A, 300B, 300C.

As discussed above, in addition to the design and configuration of the hinge 300, many more designs and configurations are available and within the scope of the present disclosure. FIGS. 4A-4C are diagrams illustrating many, but far from all, hinge mechanisms (i.e., hinge 300A, 300B, 300C) and pointing options configurations for a child car seat 100. For example and without limitation, the hinge 300A has an exposed flat-head rivet; the hinge 300B has a colored sticker 340 (which may serve as a covering member and/or a belt guide mark 322, but the covering member and/or the belt guide mark 322 is not limited to colored sticker 340.) configured to conceal the rivet on its surface; the hinge 300C has an attachment interface (e.g., including a protruding post (not shown) disposed on cover 350 and a hole 203) on the riveted area (also referred to as an hinged area), enabling secure installation following the backrest 2 riveting and plastic cover (the plastic cover may serve as one implementation of the cover 350, but the cover 350 is not limited thereto) assembly.

Referring to FIG. 4A, in an example, the hinge 300A may include a pivot shaft 310 that pivotally connects the first belt guide 320a to the second belt guide 320b. The pivot shaft 310 passes through the first belt guide 320a and is inserted into the second belt guide 320b. The pivot shaft 310 is configured, for example, as a flat-head rivet, which may be exposed from a surface of the hinge 300A (specifically, a surface of the first belt guide 320a). The hinge 300A may be further provided with a belt guide mark (not shown in this example), which may be printed on an outer surface of first belt guide 320a or affixed as a sticker to the outer surface of first belt guide 320a.

Referring to FIG. 4B, in another example, similar to hinge 300A, the hinge 300B may include a pivot shaft (not shown) that pivotally connects the first belt guide 320a to the second belt guide 320b. The pivot shaft 310 may be configured, for example, as a rivet. The hinge 300B in this example differs from the aforementioned hinge 300A in that the hinge 300B further includes a covering member. The covering member is configured, for example, as a colored sticker 340 affixed over the pivot shaft (e.g., a rivet). The colored sticker 340 is affixed to the outer surface of the first belt guide 320a. For example, the colored sticker may be configured to be green, but is not limited thereto. It should be understood that the covering member is not limited to the colored sticker 340. In other examples, the covering member may be made of plastic, metal, etc., and may be attached to the first belt guide 320a (e.g., by snap-fitting, bonding, embedding, etc.). The covering member in this example may provide a cleaner appearance for the hinge 300B. The hinge 300B is further provided with the belt guide mark 322, which may be configured as the colored sticker 340, but is not limited thereto. For example, in other embodiments, the belt guide mark 322 may be printed on the outer surface of the first belt guide 320a; or the belt guide mark 322 may be made of plastic, metal, etc., and may be attached to the first belt guide 320a (e.g., by snap-fitting, bonding, embedding, etc.). In the illustrated example, the colored sticker 340 may serve both as the covering member and as the belt guide mark 322. That is, the covering member and the belt guide mark 322 may be formed from the same component. Optionally, in other examples, the covering member and the belt guide mark 322 may be formed from different components.

Referring to FIG. 4C, in another example, the hinge 300C includes a pivot shaft 310 that pivotally connects the second belt guide 320b to the side portion of the backrest 2. The pivot shaft 310 is configured, for example, as a rivet. The hinge 300C further includes a covering member attached to the hinged area 202 of the backrest 2 to conceal the pivot shaft 310. The covering member may be configured as a cover 350 (e.g., a plastic cover). The cover 350 is secured to the outer side of hinged area 202 (e.g., by inserting the protruding post thereon into the hole 203) and can rotate with hinged area 202. The cover 350 forms the first belt guide 320a. After hinging the backrest 2 to the seat base 1 through the pivot shaft 310, the cover 350 may be assembled. This arrangement conceals the pivot shaft 310 (e.g., a rivet). The hinge 300C in this example looks most clean compared to the hinges 300A and 300B shown in FIGS. 4A and 4B. In this example, a shape of cover 350 corresponds to a shape of hinged area 202. Additionally, a belt guide mark (not shown in this example) may be provided on the cover 350. The structural configuration of the belt guide mark may be configured with reference to the above description of the belt guide mark 322 in the examples shown in FIGS. 4A and 4B, and is not repeated herein. In other examples, the protruding post of the cover 350 may serve as the pivot shaft 310. By inserting the protruding post into the hole 203 and into a hole (not shown) of the second belt guide 320b, the hinge connection between the hinged area 202 of the backrest 2 and the second belt guide 320b can be achieved, while securing the cover 350 (i.e., first belt guide 320a) to the side portion of the backrest 2.

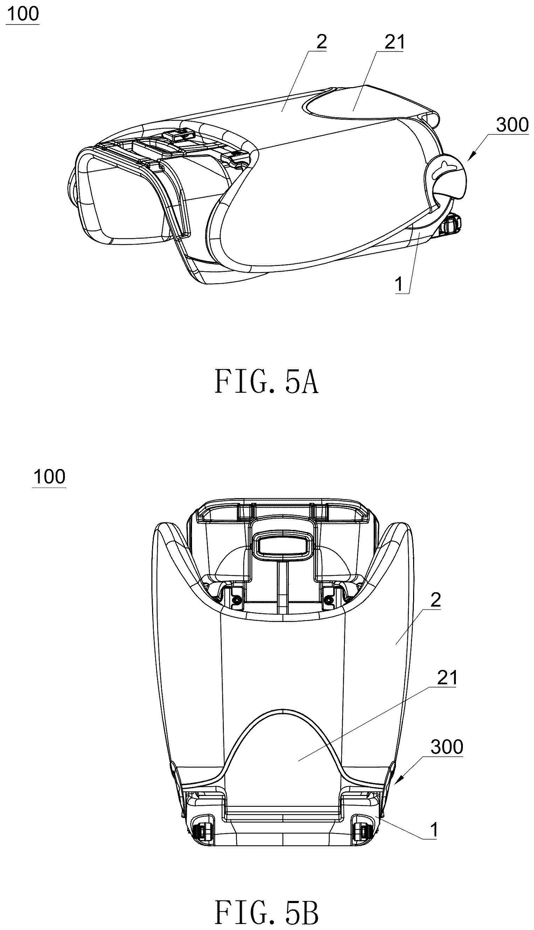

FIG. 5A is a diagram illustrating an isometric view of an exemplary or representative first embodiment of a child car seat 100 and a representative first embodiment of a backrest cover 21 in its folded position. FIG. 5B is a diagram illustrating a rear (elevational) view of an exemplary or representative first embodiment of a child car seat 100 and a representative first embodiment of a backrest cover 21.

Referring to FIGS. 5A-5B, the exemplary or representative backrest 2 of the child car seat 100 is equipped with a cover (also referred to as the backrest cover 21) on its bottom side. This backrest cover 21 is designed to conceal the structural ribs and other technical components, ensuring a smooth, aesthetically finished appearance while protecting the underlying features. For example and without limitation, the cover may be made of materials such as plastic, wood, high-strength aramid fiber material, composites, metals, or any other suitable materials that provide the necessary strength, durability, and functionality. Referring to FIGS. 5A and 5B, the side portion of the backrest 2 is located on the outer side of the seat base 1. After the child car seat 100 is folded, the seat base 1 is substantially accommodated within the backrest 2 (i.e., the seat base 1 is substantially located between side portions of the backrest 2).

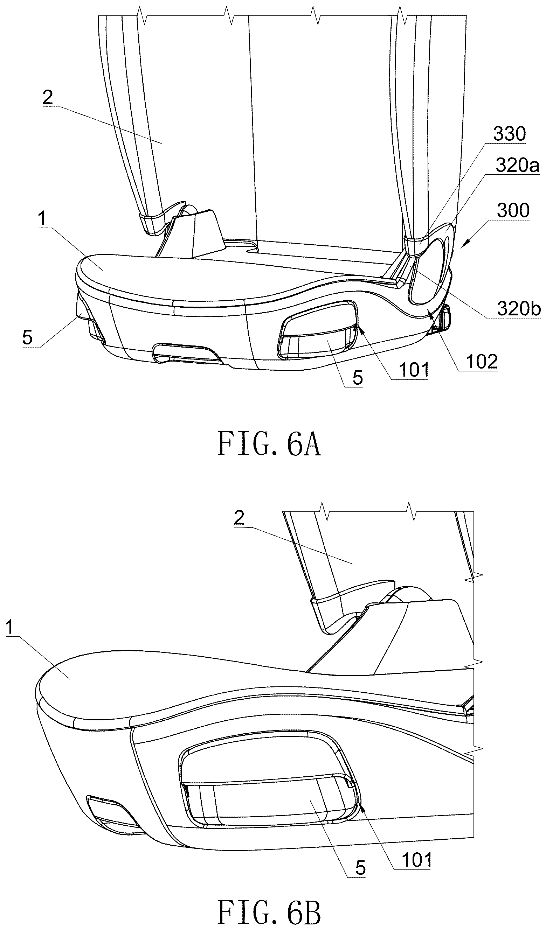

FIG. 6A is a diagram illustrating a partial isometric view of an exemplary or representative first embodiment of a child car seat 100 and a cupholder 5. FIG. 6B is a diagram illustrating a partial isometric view of an exemplary or representative first embodiment of a child car seat 100 and a cupholder 5 in FIG. 6A.

Referring to FIGS. 6A-6B, the exemplary or representative seat base 1 includes a cupholder 5 that is deployable and retractable relative to the seat base 1. As shown, the cupholder 5 is accommodated in the accommodating groove 101 on the left and/or right side of the seat base 1 when the cupholder 5 is retracted relative to the seat base 1. Each of the opposite side portions of the seat base 1 (e.g., the second belt guides 320b) is provided with a receiving groove 102, which is recessed inward relative to the outer periphery of the seat base 1. The side portions of the backrest 2 (e.g., the first belt guides 320a) are partially accommodated in the receiving groove 102 and are pivotable relative to the side portions of the seat base 1. In a left-right direction, the outer periphery of the first belt guide 320a does not protrude beyond (does not protrude from) the outer periphery of the seat base 1.

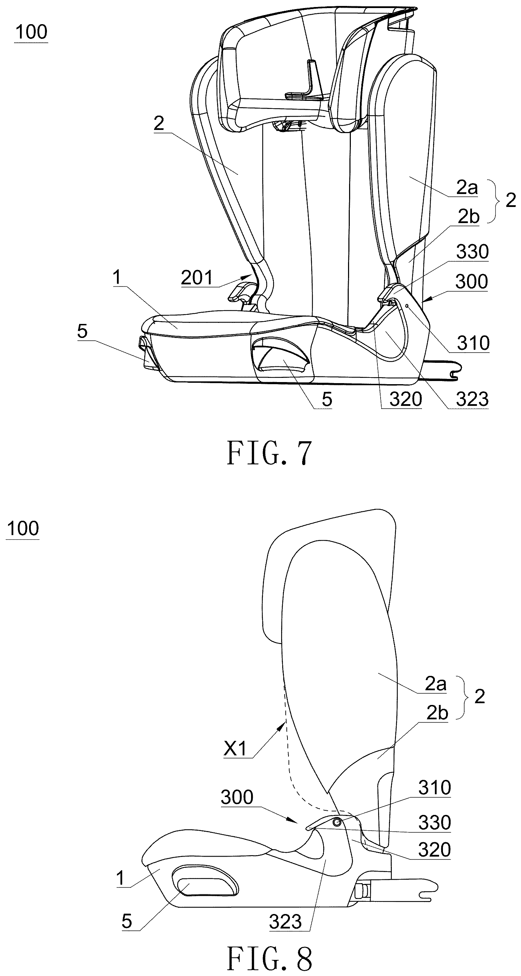

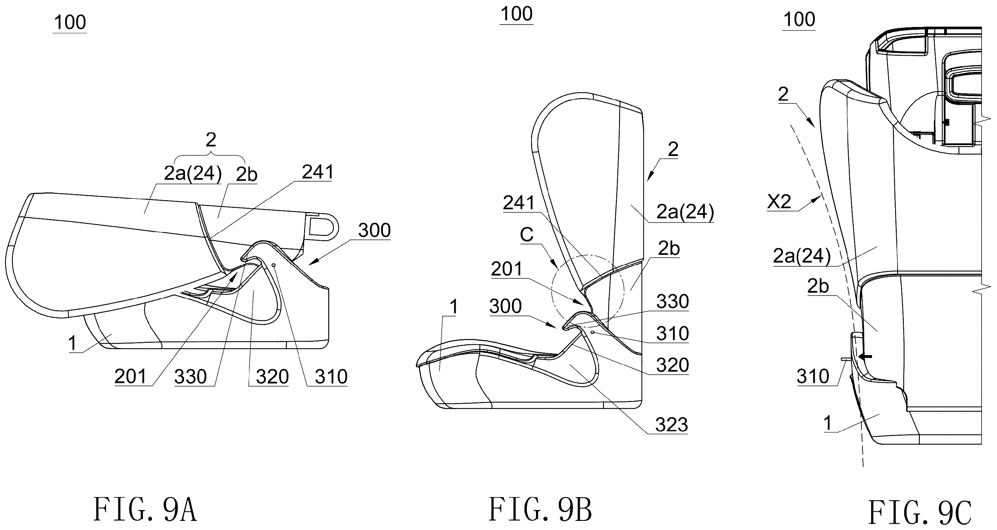

FIG. 7 is a diagram illustrating an isometric view of an exemplary or representative first embodiment of the child car seat 100 and a representative second embodiment of a hinge 300. FIG. 8 is a diagram illustrating a side (elevational) view of an exemplary or representative first embodiment of a child car seat 100 and a representative second embodiment of a hinge 300. FIG. 9A is a diagram illustrating a side (elevational) view of an exemplary or representative first embodiment of a child car seat 100 and a representative second embodiment of a hinge 300 in its folded position. FIG. 9B is a diagram illustrating a side (elevational) view of an exemplary or representative first embodiment of a child car seat 100 and a representative second embodiment of a hinge 300 in its deployed position. FIG. 9C is a diagram illustrating a partial rear view of an exemplary or representative first embodiment of a child car seat 100 and a representative second embodiment of a hinge 300 in its deployed position.

Referring to FIGS. 7-9C, the exemplary or representative backrest 2 is foldable relative to the seat base 1. In other words, the child car seat 100 in the illustrated embodiment is foldable. For example and without limitation, the child car seat 100 may be configured without an armrest, in which an armrest is omitted and replaced by a belt hook portion (also referred to as a hook portion 330). In the illustrated embodiment, the seat base 1 has side portions disposed opposite to each other. The side portions of the seat base 1 are hinged to the side portions of the backrest 2 through pivot shafts 310, respectively. The backrest 2 can rotate about the pivot shafts 310 to be folded relative to the seat base 1. Each of the side portions of the seat base 1 may form a limiting portion. For example, the limiting portion may be configured as the hook portion 330, but are not limited thereto. The pivot shaft 310 is disposed on the seat base 1 and adjacent to the hook portion 330. Optionally, belt guides 320 may be provided on opposite side portions of the seat base 1, which may be formed by the side portions of the seat base 1. Each of the belt guide 320 includes the hook portion 330 and features a curved guide surface 323. In the up-down direction, the hook portion 330 is positioned substantially above the curved guide surface 323 to retain the seatbelt 930 (see FIG. 3A) in a secured position within the belt guide 320. In the child car seat 100 shown in FIG. 9C, the pivot shaft 310 partially withdraws from a side portion of the seat base 1 in a direction indicated by the arrow.

In a representative embodiment as illustrated, the backrest 2 further includes a lower portion 2b and an upper portion 2a, in which the lower portion 2b has a reduced depth relative to the upper portion 2a. That is to say, the depth of the lower portion 2b of the backrest 2 is less than the depth of the upper portion 2a of the backrest 2. Specifically, each of the side portions of the backrest 2 includes a lower side portion located on the lower portion 2b of the backrest 2 and an upper side portion located on the upper portion 2a of the backrest 2, and a width of the lower side portion in a front-back direction is reduced relative to a width of the upper side portion in the front-back direction. The upper side portion and the lower side portion transition continuously. Referring to FIG. 7, the lower side portions of the backrest 2 are pivotally connected to the side portions of the seat base 2 through the pivot shafts, respectively. The structural configuration of the backrest 2, the seat base 1, and the hinge 300 in the child car seat 100 shown in FIG. 8 is essentially same as those of the child car seat 100 shown in FIG. 7, and there are only slight differences in their specific shapes. Referring to FIG. 8, a dashed line X1 schematically indicates an initial visual position of the backrest 2 when the lower portion 2b of the backrest 2 has not been reduced in depth. If a side portion of the backrest 2 were designed based on the reference indicated by dashed line X1, the side portion of the backrest 2 may collide with the seat base 1 when the backrest 2 pivots and folds relative to the seat base 1. Compared to dashed line X1, an edge of the lower side portion of the backrest 2 in the illustrated embodiment is noticeably offset backward, that is, the lower portion 2b of the backrest 2 has a reduced depth. Consequently, the reduced depth of the lower portion 2b is configured to minimize interference with the seat base 1 and to facilitate pivoting of the backrest 2 with respect to the seat base 1 during folding operations.

As shown in FIGS. 7-9C, the lower portion 2b of the backrest 2 is located on inner sides of the side portions of the seat base 1. In this embodiment, switching positions of the side portions of the seat base 1 and the side portions of the backrest 2 (compared to the child car seat 100 shown in FIGS. 4A-4C) gives more room on the seat base 1. This facilitates both integrated looks and an integrated seatbelt retainer (i.e., belt guide 320).

As shown in FIGS. 9A-9C, in an embodiment, the upper portion 2a of the backrest 2 is severely widen relative to the lower portion 2b thereof. In other words, a width of the upper portion 2a of the backrest 2 is greater than a width of the lower portion 2b of the backrest 2. Specifically, in the illustrated embodiment, a width of the backrest 2 in the left-right direction (i.e., the distance between the opposite side portions of the backrest 2) increases gradually from bottom to top. When the child car seat 100 is folded, at least a portion of the seat base 1 is accommodated by the backrest 2 (or sandwiched between the side portions of the backrest 2, such as the upper side portions). That is, when the child car seat 100 is folded, a portion of each of the side portions of the backrest 2 is located on the inner side of the respective side portions of the seat base 1, while other portions of the side portions of the backrest 2, for example, pass over the seat base 1 from a front side and/or an upper side of the respective belt guides 320, and at least partially sandwiching the seat base 1 therebetween. Each side portion of the backrest 2 is provided with a groove 201 configured to accommodate the hinge 300, so as to prevent the side portions of the backrest 2 from interfering with the belt guide 320 during the folding process of the child car seat 100, thereby preventing the hinge 300 from being seized. The groove 201 is generally recessed backward. A circle C in FIG. 9B indicates the approximate area of the groove 201. A position of the groove 201 is relatively high, for example, is higher than that of the pivot shaft 310 of the hinge 300.

Continuing to refer to FIGS. 9A-9C, the upper portion 2a of the backrest 2 is provided with a backrest pad 24 (also referred to as a backrest seat fabric), and an outer surface of the upper portion 2a protrudes outward relative to an outer surface of the lower portion 2b. That is, in the left-right direction, side portions of the upper portion 2a protrude outward and toward the belt guide 320 relative to the lower portion 2b. The backrest pad 24, for example, may be made of softgoods (such as fabric, leather). The backrest pad 24 (such as a boundary line 241 between the backrest pad 24 and the lower portion 2b) is located above and/or in front of the hinge 300 (specifically, the hook portion 330 of the hinge 300). For example, referring to FIG. 9B, the boundary line 241 is located above the belt guide 320 (e.g., the hook portion 330) when the backrest 2 of the child car seat 100 is unfolded; referring to FIG. 9A, the boundary line 241 is located in front of the belt guide 320 (e.g., the hook portion 330) when the backrest 2 is folded; the boundary line 241 is located both in front of and above the belt guide 320 (e.g., hook portion 330) when the backrest 2 is located in a position between the positions shown in FIGS. 9A and 9B,. That is, the backrest pad 24 is positioned outside a circle centered on the pivot shaft 310 and having a radius equal to a distance between a farthest point of the hook portion 330 and the pivot shaft 310. Thus, during the downward folding process of the backrest 2 around the pivot shaft 310, interference between the backrest pad 24 and the hinge 300 can be avoided, such that the hinge 300 is prevented from being seized or the backrest pad is prevented from being at least partially peeled off.

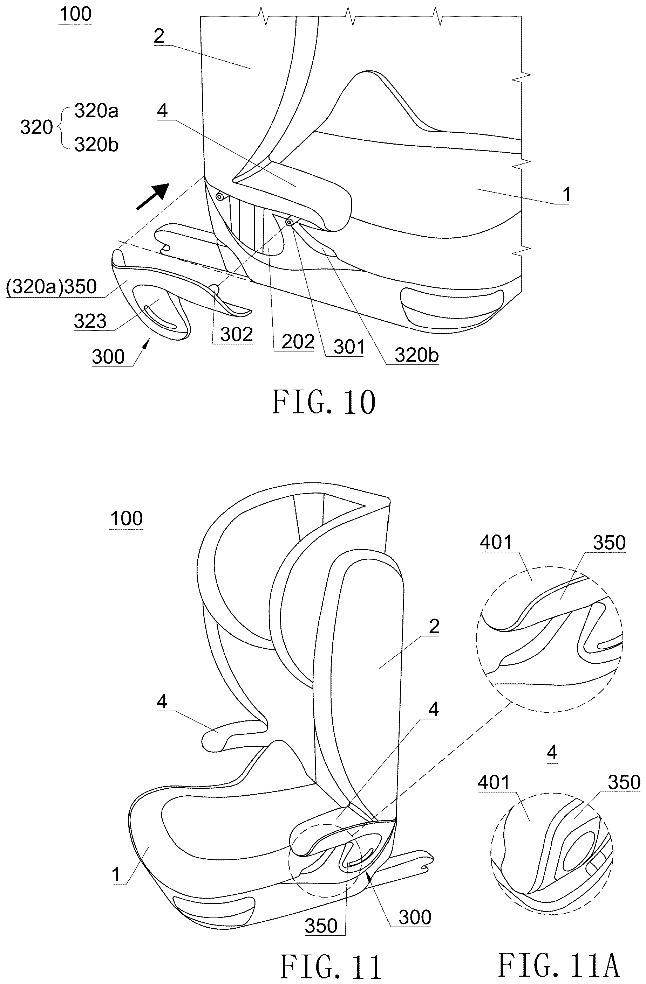

FIG. 10 is a diagram illustrating a partial isometric view of an exemplary or representative second embodiment of a child car seat 100 having a first embodiment of an armrest 4, the armrest 4 further shown with a representative third embodiment of a hinge, illustrated in an expanded state. FIG. 11 is a diagram illustrating an isometric view of an exemplary or representative second embodiment of a child car seat 100 having a representative first embodiment of an armrest 4, the armrest 4 further shown with a representative fourth embodiment of a hinge illustrated in an enlarged state.

Referring to FIGS. 10-11, the exemplary or representative child car seat 100 is configured with an armrest 4, and a hinge 300 is positioned between the seat base 1 and the backrest 2. The hinge is arranged to partially cover the armrest 4. Armrests 4 may be disposed on the opposite side potions of the backrest 2 and protrude forward from the side portions of the backrest 2. Similar to the hinge 300C, the hinge 300 in this example may include a belt guide 320 and a pivot shaft (not shown in this example). The belt guide 320 includes a first belt guide 320a disposed on the backrest 2 and a second belt guide 320b disposed on the seat base 1. The opposite side portions of the backrest 2 and the side portions of the seat base 1 (such as the second belt guide 320b) are hinged by pivot shafts (e.g., rivets, not shown in this example). In the illustrated embodiment, each of the side portions of the backrest 2 forms a hinged area 202. The first belt guide 320a is formed by a cover 350 fixedly connected to the hinged area 202. This cover 350 covers the hinged area 202 and partially covers an armrest 4. The hinged area 202 of the backrest 2 is hinged to the second belt guide 320b on the outer side of the seat base 1. The armrest 4 is located above the hinged area 202. The curved guide surface 323 of the belt guide 320 is located below the armrest 4. A portion of the cover 350 covering the armrest 4 may form a limiting portion (i.e., the second belt guide 320 includes the limiting portion) such that the seatbelt 930 (see FIG. 3A) can be limited between the armrest 4 and the curved guide surface 323 of the belt guide 320. In this embodiment, the hinge 300 may further include the cover 350. The cover 350 is assembled onto the backrest 2 in a direction indicated by an arrow in FIG. 10, for example, by inserting-fitting attachment interfaces 301, 302. The cover 350, for example, may be made of plastic.

In conjunction with FIGS. 11 and 11A, the armrest 4 may have softgoods added to its inner surface to provide a softer, more substantial visual effect while avoiding interference with the seat base 1 to allow for folding of the backrest 2. The armrest 4 includes an armrest pad 401 added to its surface, which may be made of softgoods. Softgoods added to the inner surface of the armrest 4 forms a portion of the armrest pad 401. The cover 350 is mounted on an outer side of the armrest pad 401 and covers at least an outer surface and a portion of a lower surface of the armrest 4. A partial schematic diagram in FIG. 11A illustrates the padding effect of the armrest pad 401 on the armrest 4 according to another example of the present disclosure.

In another embodiment, the child car seat 100 may be a booster seat. the booster seat includes an armrest with added softgoods to the inner trim of the armrest 4. The armrest 4 may be pivotable or extendable and can automatically adjust its position when the booster backrest (i.e., the backrest 2 of the child car seat 100) is folded down.

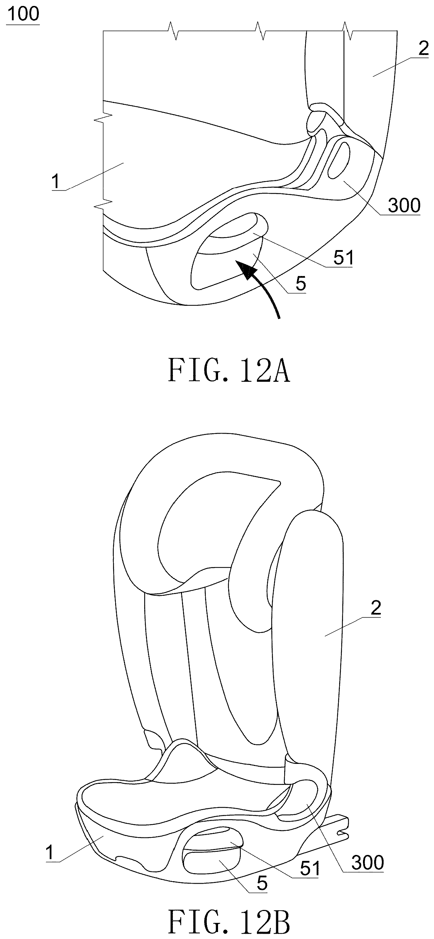

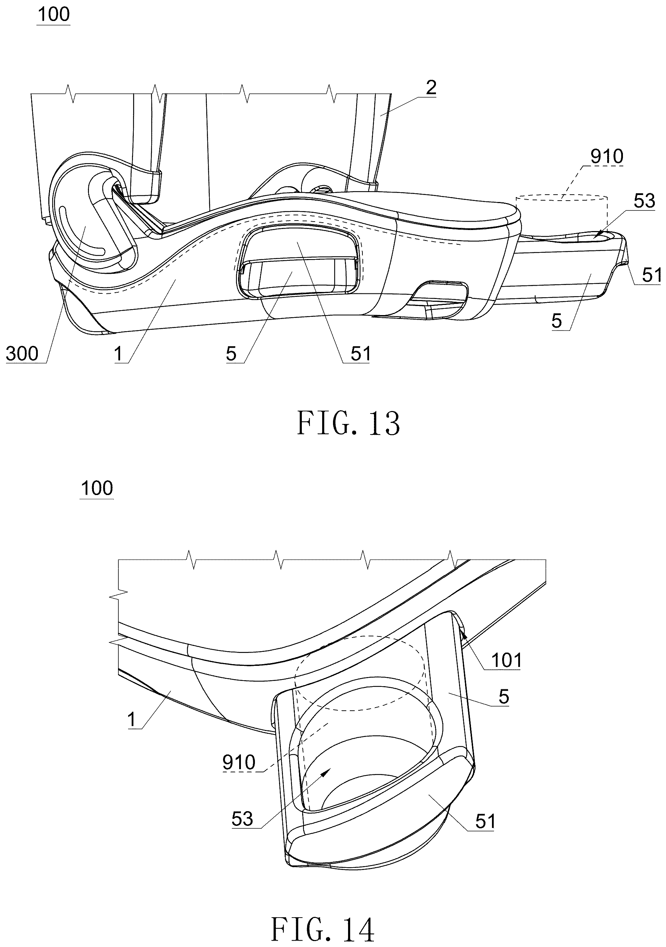

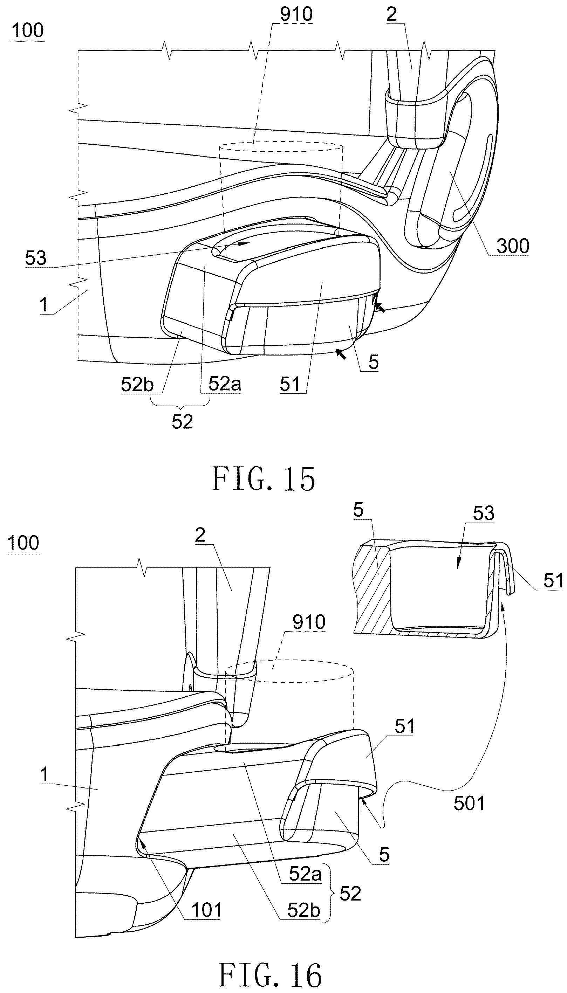

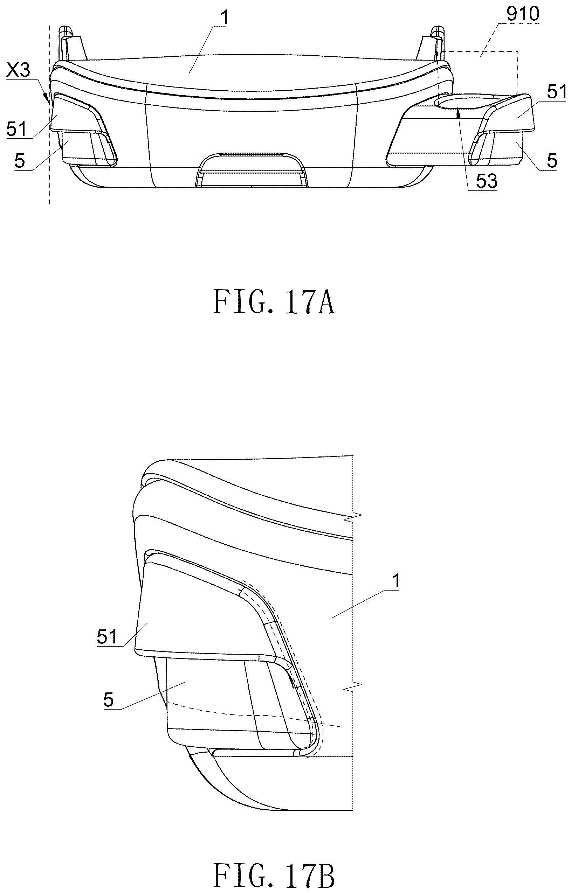

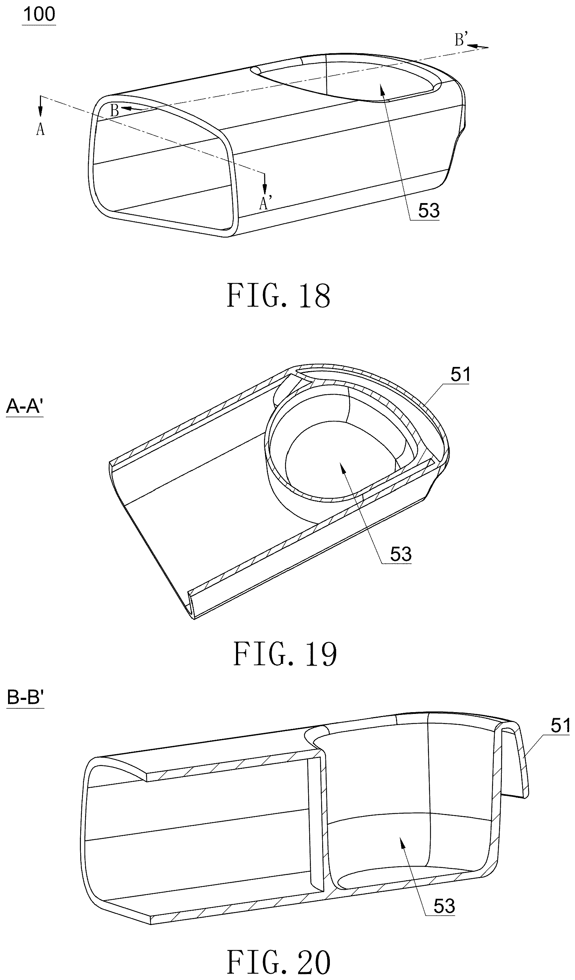

FIG. 12A is a diagram illustrating a partial isometric view of an exemplary or representative first embodiment of a child car seat 100 having a representative first embodiment of a cupholder 5, illustrated in a retracted state. FIG. 12B is a diagram illustrating an isometric view of an exemplary or representative first embodiment of a child car seat 100 having a representative first embodiment of a cupholder 5, illustrated in a retracted state. FIG. 13 is a diagram illustrating a partial side (elevational) view of an exemplary or first embodiment of a child car seat 100 having a representative first embodiment of a cupholder 5 with a cup 910, illustrated in a deployed state. FIG. 14 is a diagram illustrating a partial isometric view of an exemplary or representative first embodiment of a child car seat 100 having a representative first embodiment of a cupholder with a cup 910, illustrated in a deployed state. FIG. 15 is a diagram illustrating a partial isometric view of an exemplary or representative first embodiment of a child car seat 100 having a representative first embodiment of a cupholder with a cup 910, illustrated in a deployed state. FIG. 16 is a diagram illustrating a partial isometric view of an exemplary or representative first embodiment of a child car seat 100 with a partially enlarged portion of a representative first embodiment of a cupholder with a cup 910. FIG. 17A is a diagram illustrating a partial front view of an exemplary or representative first embodiment of a child car seat 100 having a representative first embodiment of a cupholder 5, illustrated in a deployed state. FIG. 17B is a diagram illustrating an enlarged isometric view of an exemplary or representative first embodiment of a cupholder 5 illustrated in FIG. 17A, with a cupholder 5 illustrated in a retracted state. FIG. 18 is a diagram illustrating an isometric view of an exemplary or representative first embodiment of a cupholder 5. FIG. 19 is a diagram illustrating a cross-sectional view (through the A - A' plane of FIG. 18) of an exemplary or representative first embodiment of a cupholder 5. FIG. 20 is a diagram illustrating a cross-sectional view (through the B - B' plane of FIG. 18) of an exemplary or representative first embodiment of a cupholder 5.

Referring to FIGS. 12A-20, the exemplary or representative child car seat 100 includes a deployable cupholder 5. In some instances, the cupholder 5 features a wider, soft edge, and the radius of the cupholder 5 aligns with the base outline. The cupholder 5 includes an overhang portion 51 configured to facilitate manual deployment by a user. The overhang portion 51 at a top edge 52a of the cupholder 5 allows for easy pulling. The cupholder 5 fits within the seat base outline, and its wall thickness differs to aid in smooth deployment. The backrest 2 design includes a plastic cover that hides the ribs and technical details, improving the aesthetic appearance of the seat. The plastic cover may serve as one implementation of the backrest cover 21 of the backrest 2, but the backrest cover 21 is not limited thereto. The backrest 2 may also be covered in softgoods to provide enhanced comfort. The cupholder 5 further includes a soft peripheral edge 52 to enhance user comfort. The peripheral edge 52 may include a soft top edge 52a and a soft bottom edge 52b.

In certain embodiments, one or more cupholders 5 are disposed on opposite side portions of the seat base 1 and are configured to be extendable and retractable relative to the seat base 1, allowing a user to pull them out for use and push them in for storage.

Referring to FIGS. 15-17B, a top surface of cupholder 5 forms a storage groove 53 recessed downward, which is configured to place items such as a cup 910 therein. An opening of the storage groove 53 features a soft edge. The seat base 1 includes an accommodating groove 101 configured to accommodate the cupholder 5. As shown in FIGS. 18-20, the cupholder 5 may be configured as a hollow cupholder shell to reduce its overall weight, thereby facilitating pushing and pulling operations. The wall thickness of the cupholder 5 varies at different positions. For example, the wall thickness of the cupholder 5 is greater at the junction (or transition) between a wall of the storage groove 53 and other portions of the cupholder 5. In the illustrated embodiment, the overhang portion 51 is arranged around the wall of the storage groove 53, and an operating space 501 that is accessible to the user's fingers is formed between the overhang portion 51 and the wall of the storage groove 53, allowing the cupholder 5 to be pulled out by pulling the overhang portion 51.

Referring to FIGS. 15-17A, when the cupholder 5 is extended relative to the seat base 1, the cupholder 5 extends at least partially out of the seat base 1, and the storage groove 53 is exposed outside the seat base 1 to facilitate item placement. Referring to FIGS. 17A-17B, when the cupholder 5 is retracted relative to the seat base 1, the cupholder 5 is at least partially accommodated within the accommodating groove 101, and the storage groove 53 is not exposed from the seat base 1. As shown by the dashed lines in FIG. 17B, an outline of the cupholder 5 aligns with that of the seat base 1. As shown in FIG. 17A, the overhang portion 51 of the cupholder 5 at least partially protrudes out of the accommodating groove 101 (i.e., protrudes from a peripheral side surface of the seat base 1) to enable operation of the overhang portion 51. In this case, as indicated by a dashed line X3, the cupholder 5 falls within the outline of the seat base 1. Specifically, a dimension of the seat base 1 may decrease gradually from top to bottom, and the peripheral side surface of the seat base 1 forms an inclined surface. In this way, the cupholder 5 can fall within the outline of the seat base 1 (e.g., does not exceed an outline of an upper portion of the seat base 1), while the overhang portion 51 can protrudes at least partially from the peripheral side surface of the seat base 1.

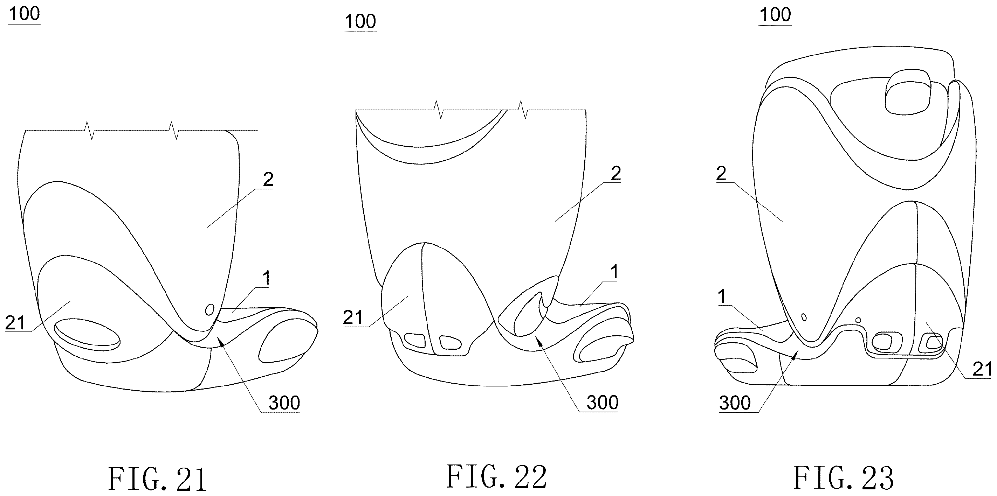

FIG. 21 is a diagram illustrating a partial isometric view of an exemplary or representative first embodiment of a child car seat 100 and a representative second embodiment of a backrest cover 21. FIG. 22 is a diagram illustrating a partial isometric view of an exemplary or representative first embodiment of a child car seat 100 and a representative third embodiment of a backrest cover 21. FIG. 23 is a diagram illustrating an isometric view of an exemplary or representative first embodiment of a child car seat 100 and a representative fourth embodiment of a backrest cover 21.

Referring to FIGS. 21-23, the exemplary or representative child car seat 100 includes a backrest cover 21 extending from the seat base 1 and partially overlying a lower portion 2b of the backrest 2. The backrest cover 21 is configured to conceal structural ribs and other internal components or technical features. The backrest cover 21, for example, is configured as a plastic cover. Depending on design requirements, backrest cover 21 may be covered with softgoods.

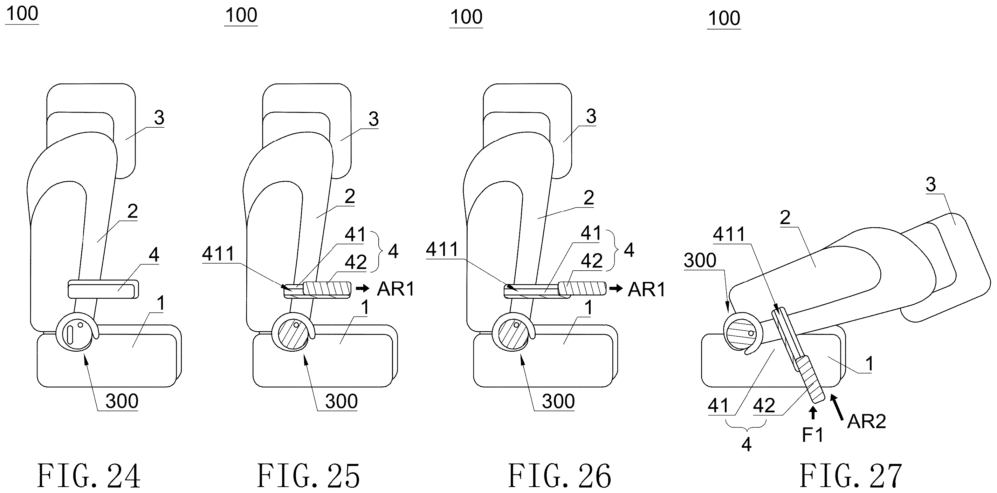

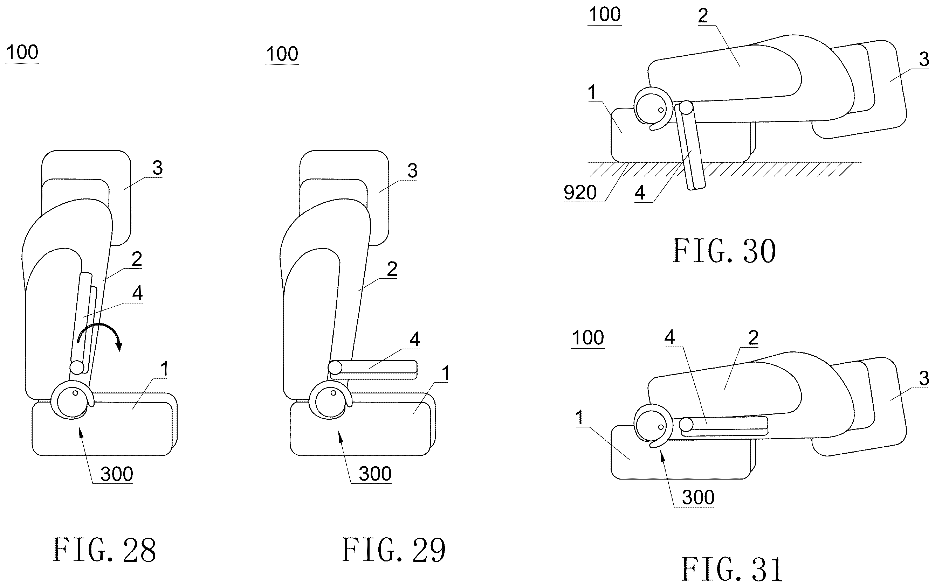

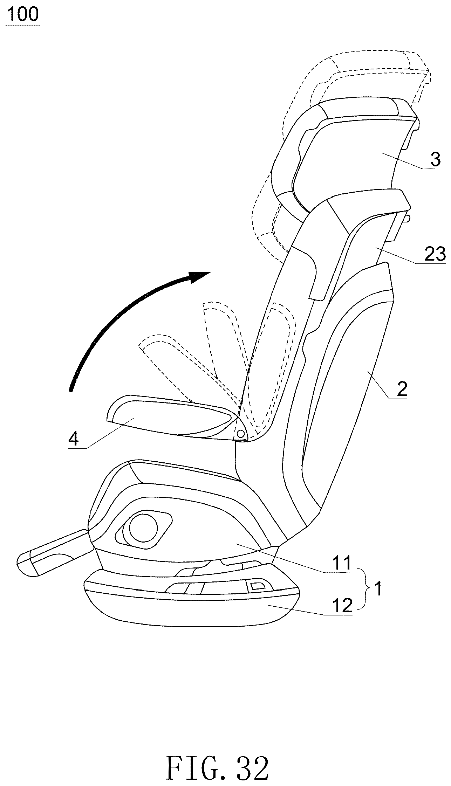

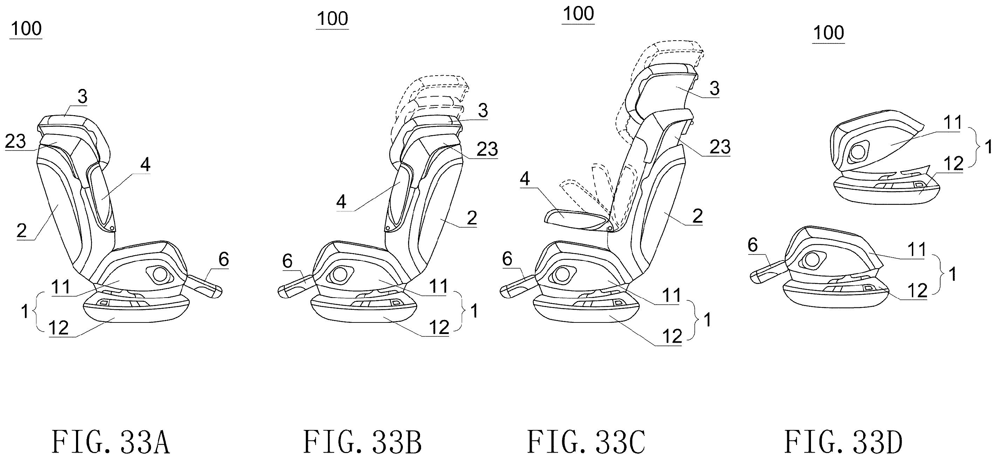

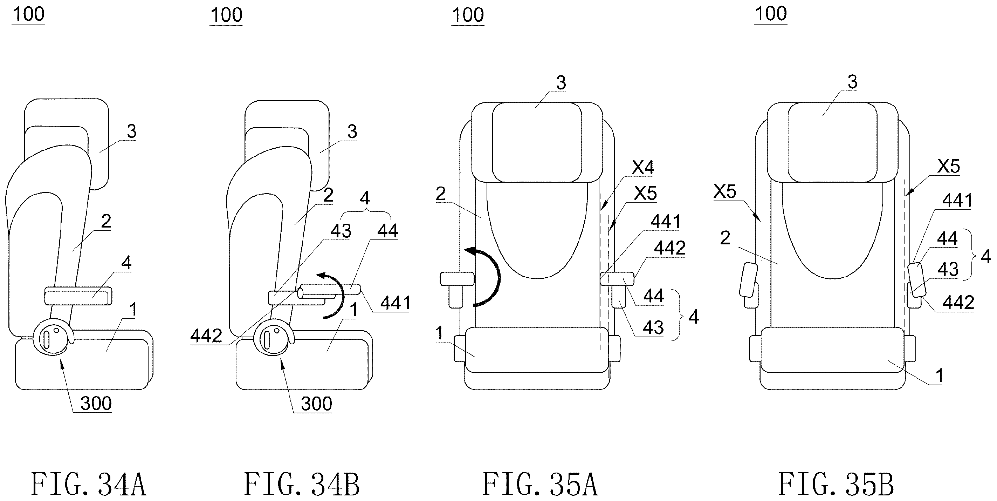

FIG. 24 is a diagram illustrating a side (elevational) view of an exemplary or representative third embodiment of a child car seat 100 having a representative second embodiment of an armrest 4, illustrated in a retracted state. FIG. 25 is a diagram illustrating a side (elevational) view of an exemplary or representative third embodiment of a child car seat 100 having a representative second embodiment of the armrest 4, illustrated in a partially deployed state. FIG. 26 is a diagram illustrating a side (elevational) view of an exemplary or representative third embodiment of a child car seat 100 having a representative second embodiment of the armrest 4, illustrated in a fully deployed state. FIG. 27 is a diagram illustrating a side (elevational) view of an exemplary or representative third embodiment of a child car seat 100 having a representative second embodiment of the armrest 4, with the child car seat 100 illustrated in a folded state. FIG. 28 is a diagram illustrating a side (elevational) view of an exemplary or representative fourth embodiment of a foldable child car seat 100 having a representative third embodiment of an armrest 4, illustrated in a stored (or upright) position. FIG. 29 is a diagram illustrating a side (elevational) view of an exemplary or representative fourth embodiment of a foldable child car seat 100 having a presentative third embodiment of an armrest 4, illustrated in a deployed (or horizontal) position. FIG. 30 is a diagram illustrating a side (elevational) view of an exemplary or representative fourth embodiment of a foldable child car seat 100 having a representative third embodiment of an armrest 4, illustrated in a deployed (or horizontal) position, with the child car seat 100 illustrated in a folded state. FIG. 31 is a diagram illustrating a side (elevational) view of an exemplary or representative fourth embodiment of a foldable child car seat 100 having a presentative third embodiment of an armrest 4, illustrated in a stored (or upright) position, with the child car seat 100 illustrated in a folded state. FIG. 32 is a diagram illustrating a side (elevational) view of an exemplary or representative fifth embodiment of a child car seat 100 having a representative fourth embodiment of an armrest 4, illustrated in multiple positions from a deployed (or horizontal) position to a stored (or upright) position. FIG. 33A is a diagram illustrating a side (elevational) view of an exemplary or representative fifth embodiment of the child car seat 100 illustrated in FIG. 32 depicted in a rearward-facing mode, with a representative fourth embodiment of an armrest 4 illustrated in a stored (or upright) position. FIG. 33B is a diagram illustrating a side (elevational) view of an exemplary or representative fifth embodiment of a child car seat 100 illustrated in FIG. 32 depicted in a forward-facing mode, with a representative fourth embodiment of an armrest 4 illustrated in a stored (or upright) position, and further including an adjustable headrest. FIG. 33C is a diagram illustrating a side (elevational) view of an exemplary or representative fifth embodiment of a child car seat 100 illustrated in FIG. 32 depicted in a forward-facing mode, with a representative fourth embodiment of an armrest 4 illustrated in a position between a stored (or upright) and deployed (or horizontal) positions, and further including an elevated backrest 2 and headrest. FIG. 33D is a diagram illustrating a side (elevational) view of an exemplary or representative fifth embodiment of a child car seat 100 illustrated in FIG. 32 depicted in no-back booster mode with a backrest 2 removed. FIG. 34B is a diagram illustrating a side (elevational) view of an exemplary or representative sixth embodiment of a foldable child car seat 100 having a representative fifth embodiment of an extendable and rotatable armrest 4, illustrated in a retracted position. FIG. 34B is a diagram illustrating a side (elevational) view of an exemplary or representative sixth embodiment of a foldable child car seat 100 having a representative fifth embodiment of an extendable and rotatable armrest 4, illustrated in an extended and turned-down position. FIG. 35A is a diagram illustrating a front (elevational) view of an exemplary or representative sixth embodiment of a foldable child car seat 100 illustrated in FIG. 34B, with a representative fifth embodiment of an extendable and rotatable armrest 4, illustrated in an extended and turned-down position. FIG. 35B is a diagram illustrating a front (elevational) view of an exemplary or representative sixth embodiment of a foldable child car seat 100 illustrated in FIG. 34B, with a representative fifth embodiment of an extendable and rotatable armrest 4, illustrated in an extended and turned-up position.

Referring to FIGS. 24-35B, the exemplary or representative child car seat 100 includes at least one armrest 4 attached to the backrest. Armrests 4 are positioned on the opposite side portions of the backrest, respectively. Each of the armrest 4 is configured to be adjustable to provide enhanced support. It is movable between a stored position, where the armrest 4 is compacted or retracted, and a deployed position, where the armrest 4 is extended for use.

In some embodiments, the armrest 4 includes a fixing portion and a sliding portion that is configured to move relative to the fixing portion. As shown in FIGS. 24-27, in an example, the sliding portion 42 of the armrest 4 slides forward and backward relative to the fixing portion 41. In the illustrated embodiment, a length of the fixing portion 41 is configured such that the fixing portion 41 will not contact a placement surface 920 (see FIG. 30, e.g., a floor surface, a seat surface of a vehicle seat, or the like) for the child car seat 100 when the backrest 2 is folded relative to the seat base 1. The sliding portion is further configured to retract or be displaced inward upon contact with the placement surface 920 (see FIG. 30, such as a floor surface, a seat surface of a vehicle seat or the like), thereby accommodating positional adjustment or impact absorption. Specifically, as shown in FIGS. 24-26, the sliding portion 42 can move forward (in a direction indicated by an arrow AR1) relative to the fixing portion 41to switch the armrest 4 from the stored position to the extended position; the sliding portion 42 can also move backward (in a direction opposite to that indicated by the arrow AR1) relative to the fixing portion 41 to switch the armrest 4 from the extended position to the stored position. Further, as shown in FIGS. 26-27, when the armrest 4 is in the extended position, the sliding portion 42 of the armrest 4 contacts the placement surface 920 (see FIG. 30) of the child car seat 100 during the folding process of the backrest 2 relative to the seat base 1, and the placement surface 920 applies an external force F1 to the sliding portion 42, causing the sliding portion 42 to slide retract relative to the fixing portion 41 in a direction of arrow AR2. Thus, the armrest 4 can be switched from the extended position to the stored position; or to an intermediate position between the extended and stored positions. At this intermediate position, the sliding portion 42 may be just in contact with the placement surface 920 without any mutual force interaction between them. Referring to FIGS. 25-27, the sliding portion 42 is slidably disposed in a sliding groove 411 of the fixing portion 41, enabling the sliding portion 42 to slide along the sliding groove 411 relative to the fixing portion 41.

In some instances, the armrest 4 can rotate upward during the folding process, allowing the backrest 2 to fold flat. As shown in FIGS. 28-31, the armrest 4 is pivotally connected to the backrest 2 and can switch between the stored position (also referred to as the upright position, where the armrest 4 is substantially parallel to the backrest 2) and the extended position (also referred to as the horizontal position, where the armrest 4 is substantially perpendicular to the backrest 2). the armrest 4 provides support when in the extended position; when the armrest 4 is in the stowed position, the backrest 2 can be folded flat relative to the seat base 1. This allows the armrest 4 to be configured longer and positioned higher. Optionally, as shown in FIGS. 29 and 31, when the armrest 4 to the stored position, during the folding process of the backrest 2 relative to the seat base 1, the armrest 4 may contact a placement surface 920 (see FIG. 30, e.g., the ground, the seat surface of a vehicle seat, etc.) and may transition from the extended position to the stored position upon being pushed by the placement surface 920. Rather than the arrangement as shown in FIG. 30, where the armrest 4 is in the extended position or in a position between the extended position and the stored position, and extends beyond the placement surface 920 after the backrest 2 is fully folded relative to the seat base 1. Optionally, the armrest 4 may automatically fold downward and be locked or secured in a belt retention position to function as a belt guide. Further, as shown in FIGS. 28 and 29, the armrest 4 can automatically pivot downward from the stored position (as indicated by the arrow in FIG. 28) to the belt retention position (e.g., the extended position, or a position between the extended and stored positions).

Additionally, in an example, as shown in FIGS. 32-33D, the child car seat 100 may be configured as a booster seat, which may include a seat base 1 and a backrest 2 detachably connected to the seat base 1. The seat base 1 may include a seat portion 11 and a base portion 12, with the seat portion 11 being adjustably disposed on the base portion 12 to regulate a height of the seat portion 11. The armrest 4 is pivotally connected (or hinged) to the backrest 2 (e.g., a side portion of the backrest 2) and can pivot about a pivot shaft 310 relative to the backrest 2. The armrest 4 can switch between a stored position (also referred to as an upright position, i.e., a position substantially parallel to the backrest 2) and an extended position (also referred to as a horizontal position, i.e., a position substantially perpendicular to the backrest 2), and can be maintained in at least two positions. Referring to FIG. 32, exemplarily, the armrest 4 can pivot from the extended position in the direction indicated by the arrow to and be maintained in a first partially extended position between the stored position and the extended position, a second partially extended position between the first partially extended position and the stored position, and the stored position in sequence. As shown in FIG. 32, when the armrest 4 is in the stored position, it can be flush with the side portion of the backrest 2. The height of the armrest 4 (or an angle between armrest 4 and backrest 2) can be adjusted to four different stages, depending on the child's age and size. It should be understood that the height of the armrest 4 may be an average height of the entire armrest 4 (e.g., the height a center of the armrest 4). In the illustrated embodiment, the smaller the angle between the armrest 4 and the backrest 2, the greater the height of the armrest 4. Continuing to refer to FIG. 32, the child car seat 100 further includes an adjustable headrest 3, which is slidably disposed on the backrest 2 to adjust the height of the headrest 3. For example, the headrest 3 can be maintained at positions corresponding to three different heights to adapt to children of different ages and sizes. The backrest 2 is provided with an adjustment portion 23. The adjustment portion 23 is disposed at an end of the backrest 2 away from the seat base 1 and is slidable upward and downward between a first height position and a second height position relative to the seat base 1. The height corresponding to the second height position of the adjustment portion 23 is greater than the height corresponding to the first height position of the adjustment portion 23. The headrest 3 can slide upward and downward together with the adjustment portion 23.

In conjunction with FIGS. 32-33D, the usage stages of the child car seat 100 may be broadly categorized into four different stages. The four stages are as follows: Stage 1 is for rear-facing, 0-2 years; Stage 2 is for forward-facing, 2+ years; Stage 3 is for forward-facing, 4+ years; and Stage 4 is for no back booster. The armrest 4 automatically resets to its initial position (e.g., the stored position) when moved up before rotating down to the desired angle. Referring to FIG. 33A: In Stage 1, the child car seat 100 is used in a rear-facing position. At this time, the armrest 4 may be used in the stored position, and the headrest 3 may be positioned at the first headrest position with a lower height. Referring to FIG. 33B. In Stage 2, the child car seat 100 is in a forward-facing position. At this time, the armrest 4 may still be used in the stored position; the headrest 3 may be positioned at the lower first headrest position with a lower heigh or adjusted as needed to the second headrest position and the third headrest position shown by dashed lines, with the third headrest position higher than the second and the second headrest position higher than the first headrest position. Referring to FIG. 33C, in Stage 3, the child car seat 100 is used in the forward-facing position. At this time, the armrest 4 may be used in the extended position or adjusted as needed to the first partially extended position, the second partially extended position, or the stored position as shown by the dashed lines in the figure; the headrest 3 may be positioned at the second headrest position or adjusted as needed to the first headrest position or the third headrest position as indicated by the dashed lines. Meanwhile, in Stage 3, the adjustment portion 23 of the backrest 2 is adjusted to the second height position. Referring to FIG. 33D, in Stage 4, the child car seat 100 is used as a booster without the backrest 2 (i.e., only the seat base 1 is retained for use), with the backrest 2 removed together with the armrest 4 and headrest 3 mounted thereon. In FIG. 33D, the seat portion 11 can rotate relative to the base portion 12 to adjust the overall height of the seat portion 11; a footrest 6 of the child safety seat 100 can be removed or retained.

In an embodiment, as shown in FIGS. 34A-35B, the child car seat 100 may be configured as a booster seat. the armrest 4 of the child car seat 100 is attached to the backrest 2 and includes an extendable portion 44 and an armrest body 43. The armrest body 43 is attached to the backrest 2 (such as the side portion of the backrest 2). The extendable portion 44 is movable between a retracted position, in which it is at least partially received within or adjacent to the armrest body 43 of the armrest 4, and an extended position, in which it projects outwardly from the armrest 4 to provide additional support or functionality. That is, the extendable portion 44 is movable between the retracted position and the extended position relative to the armrest body 43. In the extended position, the extendable portion 44 is further configured to rotate relative to the armrest 4. This rotation allows the extendable portion 44 to move between a turned-up position and a turned-down position, thereby offering ergonomic adjustability or ease of access depending on the use case.

Referring to FIGS. 34B and 35A, when the extendable portion 44 is in the extended and turn-down position (i.e., the armrest 4 is in an extended and turn-down position), in the left-right direction, two ends of the extendable portion 44 (i.e., the first end 441 and the second end 442) are respectively located on two sides of the armrest body 43. Specifically, a first end 441 of the extendable portion 44 is aligned with the inner side of the side portion of the backrest 2 (as indicated by dashed line X4), or located between the inner and outer sides of the side portion of the backrest 2, and extends inward beyond the outer side of the side portion of the seat base 1 (as shown by dashed line X5); the second end 442 of the extendable portion 44 extends outward beyond the outer side of the side portion of the backrest 2 and the outer side of the side portion of the seat base 1. Referring to FIG. 35B, when the extendable portion 44 is in the extended and turn-up position (i.e., the armrest 4 is in an extended and turn-up position), the first end 441 of the extendable portion 44 is aligned with the outer side of the seat base 1 (as shown by dashed line X5) or located beyond the outer side of the side portion of the seat base 1. When the child car seat 100 needs to be folded, the extendable portion 44 may first be rotated to the turn-up position (see FIG. 35B), the backrest 2 may then be folded downward relative to the seat base 1. This prevents interference between the armrest 4 (such as the armrest body 43) and the seat base 1 during the downward folding process of the backrest 2 relative to the seat base 1.

Although the present disclosure has been described with respect to specific embodiments thereof, these embodiments are merely illustrative and not restrictive of the present disclosure. In the description herein, numerous specific details are provided, such as examples of electronic components, electronic and structural connections, materials, and structural variations, to provide a thorough understanding of embodiments of the present disclosure. One skilled in the relevant art will recognize, however, that an embodiment of the present disclosure can be practiced without one or more of the specific details, or with other apparatus, systems, assemblies, components, materials, parts, etc. In other instances, well-known structures, materials, or operations are not specifically shown or described in detail to avoid obscuring aspects of embodiments of the present disclosure. One having skill in the art will further recognize that additional or equivalent method steps may be utilized, or may be combined with other steps, or may be performed in different orders, any and all of which are within the scope of the claimed disclosure. In addition, the various Figures are not drawn to scale and should not be regarded as limiting.

Reference throughout this specification to "one embodiment", "an embodiment", or a specific "embodiment" means that a particular feature, structure, or characteristic described in connection with the embodiment is included in at least one embodiment and not necessarily in all embodiments, and further, are not necessarily referring to the same embodiment. Furthermore, the particular features, structures, or characteristics of any specific embodiment may be combined in any suitable manner and in any suitable combination with one or more other embodiments, including the use of selected features without corresponding use of other features. In addition, many modifications may be made to adapt a particular application, situation or material to the essential scope and spirit of the present disclosure. It is to be understood that other variations and modifications of the embodiments of the present disclosure described and illustrated herein are possible in light of the teachings herein and are to be considered part of the spirit and scope of the present disclosure.

It will also be appreciated that one or more of the elements depicted in the Figures can also be implemented in a more separate or integrated manner, or even removed or rendered inoperable in certain cases, as may be useful in accordance with a particular application. Integrally formed combinations of components are also within the scope of the present disclosure, particularly for embodiments in which a separation or combination of discrete components is unclear or indiscernible. In addition, use of the term "coupled" herein, including in its various forms such as "coupling" or "couplable", means and includes any direct or indirect structural coupling, connection or attachment, or adaptation or capability for such a direct or indirect structural coupling, connection or attachment, including integrally formed components and components which are coupled via or through another component.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

All documents cited in the Detailed Description of the disclosure are, in relevant part, incorporated herein by reference; the citation of any document is not to be construed as an admission that it is prior art with respect to the present disclosure. To the extent that any meaning or definition of a term in this document conflicts with any meaning or definition of the same term in a document incorporated by reference, the meaning or definition assigned to that term in this document shall govern.

Furthermore, any signal arrows in the drawings/Figures should be considered only exemplary, and not limiting, unless otherwise specifically noted. Combinations of components of steps will also be considered within the scope of the present disclosure, particularly where the ability to separate or combine is unclear or foreseeable. The disjunctive term "or", as used herein and throughout the claims that follow, is generally intended to mean "and/or", having both conjunctive and disjunctive meanings (and is not confined to an "exclusive or" meaning), unless otherwise indicated. As used in the description herein and throughout the claims that follow, "a", "an", and "the" shall not be limited to a single item or element and include plural references unless the context clearly dictates otherwise and unless specifically disclaimed. Also as used in the description herein and throughout the claims that follow, the meaning of "in" includes "in" and "on" unless the context clearly dictates otherwise. By way of example, though specific claim language may include the word "between", the interpretation of such a word shall not be limited to preclude extent of elements beyond boundaries of the example unless specific disclaimer is made or unless by virtue of prosecution the term is to be limited. The examples of the present disclosure should therefore not be interpreted as limiting unless indicated as such.

The foregoing description of illustrated embodiments of the present disclosure, including what is described in the summary or in the abstract, is not intended to be exhaustive or to limit the present disclosure to the precise forms disclosed herein. From the foregoing, it will be observed that numerous variations, modifications and substitutions are intended and may be effected without departing from the spirit and scope of the novel concept of the present disclosure. It is to be understood that no limitation with respect to the specific methods and apparatus illustrated herein is intended or should be inferred. It is, of course, intended to cover by the appended claims all such modifications as fall within the scope of the claims. Thus, while there has been set forth embodiments of the present disclosure, the present disclosure is to be limited only by the following claims and equivalents.

## Claims

1. A child car seat (100) comprising:
a seat shell (10) comprising a seat base (1) and a backrest (2); and
a hinge (300, 300A, 300B, 300C) located between the seat base (1) and the backrest (2),
wherein the backrest (2) is foldable relative to the seat base (1).

2. The child car seat (100) of claim 1, wherein the hinge (300, 300A, 300B, 300C) comprises a belt guide (320) for passing a seatbelt (930) through the hinge (300, 300A, 300B, 300C).

3. The child car seat (100) of claim 2, wherein the belt guide (320) has a curved surface for guiding the seatbelt (930); and/or
wherein the hinge (300, 300A, 300B, 300C) comprises a hook portion (330) configured to retain the seatbelt (930) in place.

4. The child car seat (100) of any one of claims 1-3, wherein the hinge (300, 300A, 300B, 300C) is positioned on an outer perimeter of the seat base (1); and/or
wherein the backrest (2) further comprises a lower portion (2b) and an upper portion (2a), wherein a depth of the lower portion (2b) is less than a depth of the upper portion (2a), and the backrest (2) is configured to prevent collision with the seat base (1) and to facilitate pivoting when folding the backrest (2) relative to the seat base (1).

5. The child car seat (100) of any one of claims 1-3, wherein the backrest (2) further comprises a lower portion (2b) and an upper portion (2a), wherein the lower portion (2b) is located between opposite side portions of the seat base (1).

6. The child car seat (100) of claim 5, wherein a width of the upper portion (2a) is greater than a width of the lower portion (2b), such that when the child car seat (100) is folded, a portion of a side portion of the backrest (2) is located between the side portions of the seat base (1), and another portion of the side portion of the backrest (2) is located on an outer side of the seat base (1).

7. The child car seat (100) of claim 6, wherein the side portion of the backrest (2) is provided with a groove (201), which is configured to avoid the hinge (300), so as to prevent the side portion of the backrest (2) from being seized by the hinge (300, 300A, 300B, 300C).

8. The child car seat (100) of any one of claims 1-7, further comprising an armrest (4), the armrest (4) comprising softgoods on an inner trim.

9. The child car seat (100) of claim 8, wherein the armrest (4) is pivotable and extends automatically when the backrest (2) is folded down.

10. The child car seat (100) of claim 8, wherein the armrest (4) is capable of being adjusted in height through one or more stages, depending on the child's growth.

11. The child car seat (100) of any one of claims 1-10, further comprising a deployable cupholder (5) from the seat base (1), the cupholder (5) having an overhang portion (51) for easy pulling.

12. The child car seat (100) of claim 11, wherein the cupholder (5) further has a soft peripheral edge (52).

13. The child car seat (100) of any one of claims 1-10, further comprising one or more cupholders (5) disposed on opposite side portions of the seat base (1), each of the cupholders (5) being configured to be pulled out from and pushed in toward the seat base (1).

14. The child car seat (100) of any one of claims 1-13, wherein the backrest (2) comprises a cover (21) located at lower portion (2b) of the backrest (2) and extended from the seat base (1), the cover (21) being configured to hide ribs and technical details.

15. The child car seat (100) of claim 14, wherein the backrest (2) is covered with softgoods.
